# EUROPÄISCHE PATENTSCHRIFT

(11) **EP 0 738 686 B1**
(45) Veröffentlichungstag und Bekanntmachung des Hinweises auf die Patenterteilung: **28.06.2000**
(21) Anmeldenummer: 96105703.1
(22) Anmeldetag: 11.04.1996
(51) Int. Cl.: C02F 1/32

(54) **Photokatalytische Abwasserreinigung mit Stegmehrfachplatten als Solarelemente**
Photocatalytic waste-water purification with the use of multi-layered cross-braced plates as solar elements
Traitement des eaux usées utilisant des plaques multicouches entretoisées comme des panneaux solaires

(30) Priorität: 18.04.1995 DE 19514372
(43) Veröffentlichungstag der Anmeldung: 23.10.1996
(73) Patentinhaber: Röhm GmbH, 64293 Darmstadt (DE)
(72) Erfinder: Benz, Volker, Dr., 64739 Höchst (DE); Müller, Michael, Dr., 64625 Bensheim (DE); Bahnemann, Detlef, Dr., 30826 Garbsen (DE); Weichgrebe, Dirk, Dr.-Ing., 17094 Burg Stargard (DE); Brehm, Manfred, Dr., 63743 Aschaffenburg (DE)

(56) Entgegenhaltungen:
- PATENT ABSTRACTS OF JAPAN vol. 94, no. 012 & JP-A-06 343875 (JAPAN STORAGE BATTERY CO LTD), 20.Dezember 1994, & DATABASE WPI Section Ch, Week 9510 Derwent Publications Ltd., London, GB; Class D15, AN 95-069444
- PATENT ABSTRACTS OF JAPAN vol. 017, no. 355 (C-1079), 6.Juli 1993 & JP-A-05 049861 (MITSUI ENG & SHIPBUILD CO LTD), 2.März 1993, & DATABASE WPI Section Ch, Week 9314 Derwent Publications Ltd., London, GB; Class A97, AN 93-112031

## Beschreibung

Die Erfindung betrifft die Verwendung von Stegmehrfachplatten als Reaktoren aus Kunststoff für die photokatalytische Reinigung von Abwässern. Unter dem Begriff photokatalytische Abwasserreinigung wird dabei sowohl die chemische Reinigung bzw. Entgiftung als auch die Desinfektion von Abwässern mittels eines Photokatalysators unter Lichteinwirkung verstanden.

### Stand der Technik

Das Gebiet der Abwasserreinigung ist von enormer ökologischer Bedeutung. Neben der Reinigung mittels biologischer Methoden in Kläranlagen wurden in den letzten Jahren vermehrt chemische, insbesondere photochemische, Lösungsansätze zur Reinigung bzw. Entgiftung von Abwässern diskutiert. *Bahnemann, D.* (Nachr. Chem. Tech. Lab. 42 (1994) Nr. 4, S. 378 - 388) beschreibt in einem Übersichtsartikel den aktuellen Stand der solaren Abwasserentgiftung.

Ein Prinzip der photokatalytischen Abwasserreingung beruht auf der photokatalytischen Oxidation von Schadstoffen in wässriger Lösung, bzw. in Abwässern. Als Photokatalysator wird dabei derzeit vor allem Titandioxid verwendet. Energiereiche Photonen des Sonnenlichts sind in der Lage, in Materialien wie z.B. TiO₂ sogenannte Elektron/Loch-Paare zu erzeugen. Durch die Photonenenergie gehen Elektronen vom Valenzband des Halbleiters in dessen Leitungsband über und lassen im Valenzband Defektelektronen bzw. Löcher zurück. Die so entstandenen Elektronenlöcher besitzen eine hohe Oxidationskraft für praktisch alle organische Schadstoffmoleküle wie z.B. Phenol, Chloroform, Dichloressigsäure oder Propanol etc., die im Idealfall bis ins Kohlendioxid überführt werden können. Eine besonders effektive Wirkung erhofft man sich von der Kombination von solarer und herkömmlicher biologischer Abwasserreinigung.

Ein anderes Prinzip der solaren Abwasserreinigung nutzt organische Farbstoffe, wie z. B. Methylenblau, und deren Fähigkeit bei Belichtung Singulett-Sauerstoff zu erzeugen, der ebenfalls ein wirksames Oxidationsmittel darstellt und insbesondere antimikrobiell wirkt (Siehe *Archer, A*. et al. (1990) Photochemical disinfection of effluents - pilot plant studies. Wat. Res. Vol. 24, S. 837 - 843). Derartige Photokatalysatoren werden auch als Photosensibilisatoren bezeichnet. Unter Zuhilfenahme entsprechender Solarreaktoren kann dieses Verfahren z. B. dazu eingesetzt werden, um gesundheitsbedenkliche Keime in Abwässern zu eliminieren, die in wasserarmen Gebieten zur Bewässerung von Getreidefeldern oder anderen Nutzflächen verwendet werden.

Die praktische Anwendung des Prinzips der photokatalytischen Abwasserreinigung kann mittels abwasserdurchströmter Reaktoren erfolgen. Bekannt sind der Parabolrinnenreaktor, der Dünnfilm-Festbettreaktor und der Dünnfilm-Suspensionsreaktor (siehe z. B.: TNO, NL, Applied Research, Dezember 1993, 52, S.4). Beim Parabolrinnenreaktor wird die Sonnenstrahlung durch Parabolspiegel auf abwasserdurchströmte Reaktorrohre gebündelt, die z.B. aus Borsilikatglas zur besseren Ausnutzung des UV-Anteils des Sonnenlichts ausgeführt sein können. Die Solarelemente werden dabei der Sonnenstrahlung nachgeführt. Mehrere Solarelemente können z.B. durch Polyethylenrohre miteinander verbunden sein, die Aperturfläche einer größeren Versuchsanlage kann z.B. bei einer Länge von ca. 100 m ca. 200 m² betragen. Der Photokatalysator TiO₂ wird dabei in Suspension verwendet und muß nach der Abwasserreinigung durch Filtration abgetrennt werden.

Beim Dünnfilm-Festbettreaktor kann der Photokatalysator auf einer Glas- oder auf einer Stahlplatte fixiert werden. Der aufwendige Schritt zur Trennung von TiO₂₋Teilchen und gereinigtem Abwasser entfällt daher. Das zu reinigende Abwasser kann über die Glasplatte in dünner Schicht geführt werden. Das Solarelement ist schräg zur Sonnenstrahlung aufgestellt. Ein Vorteil gegenüber dem Parabolrinnenreaktor, der als Licht-konzentrierender Reaktor dem Sonnenstand nachgeführt werden muß, da er nur die direkte Sonnenstrahlung nutzt, ergibt sich darin, daß der Dünnfilm-Festbettreaktor durch seine ebenen Solarelemente auch diffuse Sonnenstrahlung zu absorbieren vermag.

Trotz seiner Vorteile gegenüber dem Parabolrinnenreaktor stehen dem Einsatz der Dünnfilm-Festbettreaktoren noch eine Reihe bisher nicht gelöster Probleme entgegen. So sind die bislang realisierten Dünnfilm-Festbettreaktoren bisher nur Versuchsreaktoren geringer Größe von z.B. 0,7 m² Solarelementfläche. Zudem ist der konstruktive Aufwand zur Herstellung, insbesondere zum Zusammenfügen und Abdichten der bis heute verwirklichten Solarelemente außordentlich hoch. Eine einfache Überführung der Konstruktion in einen größeren Maßstab scheint daher nicht günstig. Lösungen für großflächige, einfach herzustellende und damit kostengünstige Solarelemente fehlen bisher.

Stegmehrfachplatten, insbesondere aus Polycarbonat oder aus Polymethylmethacrylat, finden vor allem als transparente oder transluzente Überdachungselemente im Baubereich eine breite Anwendung. Ferner ist die Verwendung von Mehrkammer-Kunststoffplatten als Solarkollektoren z.B. aus DE 4 234 947 bekannt. Dabei werden die Kammern als flüssigkeitsdurchströmte Räume genutzt und die Stirnseiten jeweils mittels eines, die Kammern verbindenden, Sammeladapters verschlossen. Die Adapter haben jeweils eine Zu- bzw-Ablauföffnung. Das deutsche Gebrauchsmuster G 94 055 157 beschreibt eine Stegmehrfachplatte aus Polymethylmethacrylat, die nach teilweisem Öffnen der Stegenden und Verkleben der Stirnseiten als flüssigkeitsdurchströmbares Solarkollektorelement genutzt werden kann.

### Aufgabe und Lösung

Der vorliegenden Erfindung liegt die Aufgabe zugrunde, einen Reaktor mit einem stabilen, leichten und vor allem preisgünstigen Solarelement bereitzustellen. Die Aufgabe wurde gelöst durch die Verwendung von Stegmehrfachplatten als Reaktor für die photokatalytische Abwasserreinigung, bei dem das Solarelement (1) im wesentlichen aus einer oder mehreren flüssigkeitsdurchströmbaren Stegmehrfachplatten aus thermoplastisch extrudierbarem, transparentem oder transluzenten Kunststoff besteht, in deren Innern sich ein Photokatalysator befindet.

Wesentlich für die Erfindung ist, daß für das Solarelement ein bereits vorhandener, industriell im großen Maßstab hergestellter und daher kostengünstiger Kunststoffkörper, die Stegmehrfachplatte, verwendet wird. Stegmehrfachplatten, insbesondere aus Polymethylmethacrylat, zeichnen sich durch eine hohe Biegesteifigkeit, je nach Ausführung hohe Transparenz oder Transluzenz und eine ausgezeichnete Witterungsbeständigkeit aus. Sie sind zudem durchlässig für UV-Licht, was bei der Verwendung von z. B. TiO₂ als bisher gebräuchlichstem Katalysators essentiell ist. Zudem sind Mittel und Methoden zum teilweisen Verschließen der Stegmehrfachplatten an den Stirnseiten durch mechanische Dichtungen oder durch Verkleben bekannt. Zu- und Ablauföffnungen müssen natürlich vorhanden sein, damit die Flüssigkeitsdurchströmbarkeit der Stegmehrfachplatte gewährleistet ist. Die Erfindung betrifft weiterhin eine Stegmehrfachplatte aus transparentem oder transluzentem thermoplastischen, extrudierbaren Kunststoff, deren Hohlkammern mit einem Photokatalysator beschichtet sind.

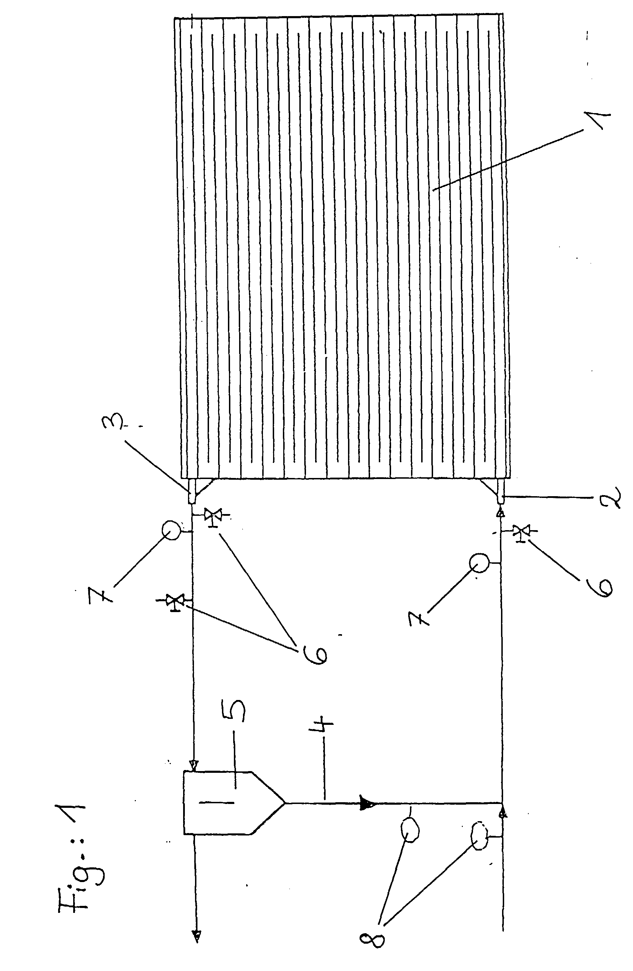

Die Erfindung wird durch die Figur 1 erläutet, soll aber nicht auf die dargestellte Ausführungsform beschränkt sein
- Figur 1 :: Schema für einen Versuchsreaktor

Kernstück des Reaktors ist das meanderförmig durchströmbare Solarelement (1), das an den Stirnseiten bis auf die Öffnungen für den Zulauf (2) und den Ablauf (3) verschlossen ist. (4) bezeichnet eine Kreislaufleitung. (5) bezeichnet eine Fest/Flüssigtrenneinheit (z. B. zum Abtrennen von TiO2 aus dem gereinigten Abwasser). (6) bezeichnet Entlüftungshähne. (7) bezeichnet Druckmanometer zur Erfassung des Drucksverlustes. Der Kreislauf- sowie der Zulaufstrom kann durch induktive Durchflußmeßgeräte (8) erfaßt werden. Die Strömungsrichtung ist durch Pfeile angegeben.

### Ausführung der Erfindung

Der im folgenden verwendete Begriff photokatalytische Abwasserreinigung umfaßt sowohl die chemische Reinigung bzw. Entgiftung als auch die Desinfektion von Abwässern mittels eines Photokatalysators unter Lichteinwirkung. Der Begriff Reaktor wird für eine Anlage zur photokatalytischen Abwasserreinigung in ihrer Gesamtheit verwendet. Der Reaktor besteht insbesondere aus einem oder mehreren Solarelementen (1), sowie aus weiteren üblichen Reaktorbestandteilen, die für einen Flüssigkeitsumlauf und/oder -kreislauf durch die Solarelemente benötigt werden, wie z. B. Leitungen, Pumpen, ggf. Probennahmeventile, Vorratstanks usw..

Der Begriff Solarelement bezeichnet diejenigen Reaktorbestandteile, in denen die photokataytischen Prozesse unter Lichteinstrahlung stattfinden. Bei der Lichtquelle kann es sich sowohl um Sonnenstrahlung (solare Abwasserreinigung) als auch um künstliches Licht handeln. Unter dem Begriff Photokatalysator werden sowohl photokatalytisch wirksame Substanzen wie z. B. TiO₂ als auch Photosensibilisatoren wie z. B. Methylenblau verstanden.

Wesentlich für die Erfindung ist die Verwendung einer Stegmehrfachplatte als Solarelement (1).

Für das Solarelement werden bevorzugt handelsübliche Stegmehrfachplatten aus transparentem oder transluzentem Kunststoff verwendet. Bei diesen Platten verlaufen die Stege senkrecht zu den Gurtflächen. Übliche Abmessungen können z.B. bei Stegdoppelplatten ca. 5 - 40 mm Dicke, Stegabstände ca. von 5 bis 80 mm, Breite ca. 500 - 2500 mm und Längen von ca. 1000 - 8000 mm sein. In Prinzip können jedoch auch Stegmehrfachplatten mit abweichenden Geometrien oder Maßen verwendet werden.

Beispiele für Kunststoffmaterialien sind Polymethylmethacrylat, Polycarbonat, Polystyrol, Polyester oder Polyolefine.

Bei der Wahl des Kunststoffmaterials ist die für die Wirkung des Photokatalysators relevante Bandlücke bzw. das entsprechende Strahlungsspektrum zu beachten. Diese liegt beim derzeit gebräuchlichsten Katalysator TiO₂ unterhalb von etwa 390 nm, so daß nur in diesem Bereich durchlässige transparente oder transluzent eingefärbte Kunststoffe in Frage kommen. Bevorzugt werden bei der Verwendung von TiO₂ als Katalysator Stegmehrfachplatten die im wesentlichen aus Polymethylmethacrylat bestehen, während z.B. Platten aus Polycarbonat wegen ihrer geringen Durchlässigkeit für UV-Licht weniger geeignet sind. Bei der Verwendung von anderen Photokatalysatoren wie z.B. Hämatit oder Eisen(III)/Titan(IV)-Mischoxiden oder Photosensibilisatoren wie z. B. Methylenblau, die im Bereich des sichtbaren Lichts eine katalytische Wirkung entfalten, können z.B. auch Platten mit geringer UV-Durchlässigkeit oder UV-undurchlässige Platten verwendet werden.

Stegmehrfachplatten aus transparentem oder transluzentem Kunststoff sind z.B. als Stegdoppelplatten, Stegdreifach- und Stegvierfachplatten in unterschiedlichen Ausführungen im Handel. Bevorzugt werden Stegdoppelplatten verwendet. Bei größeren Solarelementen z.B. können jedoch auch Stegdreifach- oder Stegvierfachplatten oder auch Stegplatten spezieller Geometrie wegen ihrer höheren Stabilität zum Einsatz kommen. Völlig transparente Stegmehrfachplatten werden bevorzugt verwendet, da in der Regel eine möglichst hohe Ausnutzung der Sonnenenergie gewünscht wird. Transluzente Platten können unter Umständen gewählt werden, wenn z. B. eine übermäßige Erwärmung des zu reinigenden Abwassers vermieden werden soll. Hier können z.B. weiß getönte Stegmehrfachplatten mit einer Lichtdurchlässigkeit von z.B. 40 - 85 % verwendet werden.

Der Photokatalysator, z.B. TiO₂, kann in Suspension durch die Stegmehrfachplatte geführt werden. In diesem Fall kann das TiO2 nach vollzogener Reinigung des Abwasser z. B. durch Ausfällung und/oder Filtration entfernt werden. Dies kann z. B. durch Einstellen eines pH-Wertes, z. B. pH 6 - 8, erfolgen, bei dem das TiO2 nicht mehr stabil in Suspension bleibt und sedimentiert.

Es ist jedoch auch möglich, den Photokatalysator auf der Innenseite der Stegmehrfachplatte zu fixieren. Verfahren zur Innenbeschichtung von Stegdoppelplatten mit wasserspreitenden Schichten sind z.B. aus EP 530 617 A1 bekannt. Hierbei werden mittels eines speziellen Werkzeuges Löcher im Obergurt der nach der Extrusion erkalteten Hohlstrangprofile erzeugt durch die das Beschichtungsmittel eingefüllt werden kann. Um eine vollständige Benetzung der Innenräume zu erreichen wird das Hohlstrangprofil hinter dem Werkzeug im elastischen Bereich nach unten gebogen und kontinuierlich mit dem Beschichtungsmittel benetzt. Nach dem Durchlaufen dieser Wegstrecke wird das Hohlkammerprofil wieder nach oben geführt, so daß überschüssiges Beschichtungsmittel wieder zurückläuft. In analoger Weise kann eine Beschichtung mit einer kolloidalen z.B. 0,1 bis 15 %-igen TiO₂ Suspension in H₂O, die ggf. noch ein wasserunlösliches Benetzungsmittel enthält, z.B. 1 bis 10 Gew.-% eines oxyethylierten Fettalkohols, vorgenommen werden. Die Schicht kann anschließend z.B. durch Einblasen von Warmluft getrocknet bzw. fixiert werden. Die Katalysatormenge in der aufgebrachten Schicht soll ca. 0,01 bis 5 mg/cm² betragen.

Weiterhin können Stegdreifach- oder Stegvierfachplatten auch durch Tauchen oder Innenfluten beschichtet werden. Wasserlösliche Photokatalysatoren können z. B. zusammen mit einer Lackschicht, in der sie fixiert werden, im Innern der Platten z. B. durch Tauchen oder Fluten aufgebracht werden.

Gegebenfalls kann eine zusätzlich Photoplatinierung der Katalysatorschicht sinnvoll sein, um zu einer Erhöhung der Reaktionsgeschwindigkeit der Redoxprozesse zu gelangen. Hierfür kann z.B. wie bei MURADOV, N.Z. (1994, Solar Energy, Band 52, S. 283 - 288) beschrieben, metallisches Platin aus einer H₂PtCl₆-Lösung durch Lichteinwirkung auf der TiO₂-Schicht fixiert werden.

Die als Solarelement (1) verwendete Stegmehrfachplatte dient als System zur Durchführung des zu reinigenden bzw. zu entgiftenden Abwassers bzw. einer Abwasser/Photokatalysator-Suspension. Es besitzt daher jeweils mindestens einen Zu- und einen Ablauf, so daß ein flüssigkeitsdurchströmbares System vorhanden ist. Zweckmäßiger Weise wird der größte Teil der Stirnseiten, mit Ausnahme des Zulaufs (2) bzw. des Ablaufs (3), durch Metall oder bevorzugterweise Kunststoffteile dicht verschlossen. Dabei können die Hohlkammern an den Enden in einem Sammelkanal, der durch den Adapter gebildet wird vereinigt werden. Ebenso kann eine meanderförmige Durchströmung der Hohlkammer angelegt werden, indem z.B. zunächst die Stegenden alternierend ausgefräst oder ausgebrochen und dann die Stirnseiten verschlossen werden, so daß das Abwasser einen Hohlraum nach dem anderen durchströmt, bevor es wieder aus dem Solarelement austritt. Mehrere Solarelemente können miteinander verbunden sein. Die Durchflußgeschwindigkeit des Abwassers soll so gewählt werden, daß eine turbulente Strömung vorhanden ist.

Zum Verschluß des Solarreaktors sind zahlreiche Systeme für Stegmehrfachplatten bekannt. DE 4 234 947 beschreibt entsprechende Sammeladapter die mittels Zapfen mit Dichtungen an Mehrkammerkunststoffplatten angeflanscht werden können. EP 381 028 beschreibt den Anschluß eines Kunststoffsammeladapters an Stegplatten, die als Wärmetauschelemente dienen, durch Verschweißen des Kunststoffs. Das deutsche Gebrauchsmuster G 94 055 157 beschreibt z.B. eine dauerhafte und spannungsrißfreie Verklebung für Stegmehrfachplatten aus Polymethylmethacrylat. Die dort im Beispiel beschriebene flüssigkeitsdurchströmbare Stegdoppelplatte ist z.B. als Solarelement für einen Reaktor für die solare Abwasserreinigung geeignet.

### BEISPIEL

### Verwendung einer Stegdoppelplatte aus Polymethylmethacrylat als Solarelement eines Versuchsreaktors für die solare Abwasserreinigung.

Es wird eine Stegdoppelplatte aus transparentem Polymethylmethacrylat mit dem Abmessungen, Breite 980 mm, Länge 1400 mm, Höhe 16 mm und Stegabstand 32 mm verwendet. Die Stegenden werden jeweils alternierend an den Enden um ca. 2 cm ausgefräst. Eine Stirnseite wird durch Verkleben mit einem Polymethylmethacrylatstreifen vollständig verschlossen. Die andere Stirnseite wird ebenfalls verschlossen bis auf jeweils eine Öffnung als Zulauf und als Ablauf. Das flüssigkeitsdurchströmte System ist so ausgelegt, daß ausgehend vom Zulauf alle Hohlkammern nacheinander durchströmt werden bis die Flüssigkeit durch den Ablauf austritt. Zu- und Ablauf werden mit dem flüssigkeitfördernden System des Reaktors verbunden, so daß verunreinigtes Abwasser durch das Solarelement geleitet werden kann. Einem künstlich mit 1 mmol/l Dichloressigsäure (DCA) hergestellten Modellabwasser werden ca. 7,5 g TiO₂/l (Hombikat UV100®, Sachtleben) als Photokatalysator zugesetzt. Die Modellabwasser/Photokatalysator-Suspension wird mit einem Anfangs-pH-Wert von 3,6 eingesetzt. Die Durchflußgeschwindigkeit beträgt ca. 0,7 m³/h. Das Solarelement wird zur Simulation des Sonnenlichts mit einem Lampenfeld bestehend aus sieben Lampen des Typs Phillips TL-40 UVA mit einer Leistung von 105 W/m2 h beleuchtet.

Die bestrahlte Reaktoroberfläche beträgt ca. 0,7 m². Aus der Auftragung des Logarithmus der DCA-Konzentration gegen die Zeit (Auftragung 1. Ordnung) wurde ein Abbau von 0,0124 mmol/l · min ermittelt. Daraus ergibt sich eine Quantenausbeute von ca. 2 %.

## Patentansprüche

1. Verwendung einer Stegmehrfachplatte als Solarelement (1) für einen Reaktor für die photokatalytische Abwasserreinigung, dadurch gekennzeichnet, daß das Solarelement (1) im wesentlichen aus einer oder mehreren flüssigkeitsdurchströmbaren Stegmehrfachplatten aus thermoplastisch extrudierbarem transparentem oder transluzenten Kunststoff besteht, in deren Innern sich ein Photokatalysator befindet.

2. Verwendung einer Stegmehrfachplatte nach Anspruch 1, dadurch gekennzeichnet, daß die Stegmehrfachplatten im wesentlichen aus Polymethylmethacrylat bestehen.

3. Verwendung einer Stegmehrfachplatte nach Anspruch 1 oder 2, dadurch gekennzeichnet, daß der Photokatalysator im Innern der Stegmehrfachplatten als Suspension oder Lösung im zu reinigenden Abwasser vorhanden ist.

4. Verwendung einer Stegmehrfachplatte nach einem oder mehreren der Ansprüche 1 bis 3, dadurch gekennzeichnet, daß der Photokatalysator als Innenbeschichtung der Stegmehrfachplatte vorliegt.

5. Verwendung einer Stegmehrfachplatte nach einem oder mehreren der Ansprüche 1 bis 4, dadurch gekennzeichnet, daß der Photokatalysator TiO₂ ist.

6. Stegmehrfachplatte aus thermoplastischem extrudierbaren Kunststoff, dadurch gekennzeichnet, daß ihre Hohlkammern mit einem Photokatalysator beschichtet sind.

7. Stegmehrfachplatte nach Anspruch 6, dadurch gekennzeichnet, daß der Photokatalysator TiO₂ ist.

## Claims

1. Use of a multilayer cellular plate as a solar element (1) for a reactor for photocatalytic purification of waste water, characterised in that the solar element (1) consists essentially of one or more multilayer cellular plates through which liquid can flow, made of thermoplastically extrudable, transparent or translucent plastics, inside which there is a photocatalyst.

2. Use of a multilayer cellular plate according to claim 1, characterised in that the multilayer cellular plates consist essentially of polymethylmethacrylate.

3. Use of a multilayer cellular plate according to claim 1 or 2, characterised in that the photocatalyst inside the multilayer cellular plates is present as a suspension or solution in the waste water which is to be purified.

4. Use of a multilayer cellular plate according to one or more of claims 1 to 3, characterised in that the photocatalyst is present as an internal coating on the multilayer cellular plate.

5. Use of a multilayer cellular plate according to one or more of claims 1 to 4, characterised in that the photocatalyst is TiO₂.

6. Multilayer cellular plate of thermoplastic extrudable plastics, characterised in that the hollow chambers therein are coated with a photocatalyst.

7. Multilayer cellular plate according to claim 6, characterised in that the photocatalyst is TiO₂.

## Revendications

1. Utilisation d'une plaque multicouche entretoisée comme élément solaire (1) pour un réacteur destiné à la purification photocatalytique des eaux usées,
caractérisée en ce que
l'élément solaire (1) se compose essentiellement d'une ou plusieurs plaques multicouches entretoisées pouvant être traversées par un liquide et constituées de matières synthétiques thermoplastiques extrudables, transparentes ou translucides, à l'intérieur duquel se trouve un photocatalyseur.

2. Utilisation d'une plaque multicouche entretoisée selon la revendication 1,
caractérisée en ce que
les plaques multicouches entretoisées se composent essentiellement de polyméthacrylate de méthyle.

3. Utilisation d'une plaque multicouche entretoisée selon la revendication 1 ou 2,
caractérisée en ce que
le photocatalyseur est présent à l'intérieur des plaques multicouches entretoisées sous forme de suspension ou de solution dans l'eau usée à purifier.

4. Utilisation d'une plaque multicouche entretoisée selon une ou plusieurs des revendications 1 à 3,
caractérisée en ce que
le photocatalyseur se présente comme revêtement interne de la plaque multicouche entretoisée.

5. Utilisation d'une plaque multicouche entretoisée selon une ou plusieurs des revendications 1 à 4,
caractérisée en ce que
le photocatalyseur est TiO₂.

6. Plaque multicouche entretoisée en matériau synthétique thermoplastique extrudable,
caractérisée en ce que
ces chambres creuses sont recouvertes d'un photocatalyseur.

7. Plaque multicouche entretoisée selon la revendication 6,
caractérisée en ce que
le photocatalyseur est TiO₂.
